# EUROPEAN PATENT APPLICATION

(11) **EP 4 524 053 A1**
(43) Date of publication of application: **19.03.2025**
(21) Application number: 24189972.3
(22) Date of filing: 22.07.2024
(51) Int. Cl.: B65D 65/46, B65D 85/808

(54) **PERMEABLE BAG WITH ORGANIC FERTILIZER FOR THE EXTRACTION OF NUTRIENTS FROM A LIQUID**

(30) Priority: 12.09.2023 ES 202331608 U
(71) Applicant: Ecocelta Galicia, S.L., 36895 Ponteareas Pontevedra (ES)
(72) Inventor: QUIROGA RIVERO, Sergio Horacio, 36860 Ponteareas (ES)
(74) Representative: Pons

(57) **Abstract**

The present invention describes a permeable bag or sachet with organic compost that allows extracting nutrients in a liquid, characterised in that the bag contains an organic compost where the solid material is retained inside the bag or sachet. In this way, the organic compost is packaged in bags or sachets like tea bags, which may be biodegradable, from which a liquid fertiliser can be prepared, ready to be used on plants.

## Description

The object of the present invention, as stated by the title of the invention, is a permeable bag or sachet with organic compost for extracting nutrients in a liquid fertiliser, leaving the solid material retained in the bag or sachet, wherein the organic compost is packaged in bags or sachets like tea bags, which may be biodegradable, from which a liquid fertiliser can be prepared, ready to be used on plants.

The present invention is characterised by the special design and configuration of each and every one of the elements, on one hand, the fact of storing the compost in bags or sachets, in addition to the fact that they are biodegradable and compostable bags.

Therefore, the present invention falls within the field of composting means, particularly among those used to obtain liquid fertilisers.

### BACKGROUND ART

In the state of the art, liquid fertilisers that are purchased in packages for later use are known; however, ready-made fertilisers of this type lose their properties over time, in addition to becoming contaminated when in contact with plastic materials.

Moreover, as it is necessary to use plastic packaging to distribute liquid fertilisers, this is a source of waste generation and pollution.

Therefore, an object of the present invention is to overcome the drawbacks of the state of the art, derived from the distribution of liquid fertilisers in plastic bottles with the consequent loss of their properties, as well as the generation of waste due to the plastic packaging used in distribution, developing a bag or sachet of organic compost like the one described below and which is included in its essentiality in the first claim.

### DESCRIPTION OF THE INVENTION

The object of the present invention is included in its essentiality in the independent claim and the different embodiments are included in the dependent claims.

The object of the present invention is a permeable bag or sachet with organic compost that allows obtaining the nutrients in a liquid fertiliser, wherein the solid is retained in the bag or sachet.

In a possible embodiment, the permeable bag or sachet is made of a biodegradable material, preferably PLA non-woven fabric, which is a new type of bio-based material, which has good uniformity, excellent drape, smoothness, air permeability, natural antibacterial properties, good affinity with the skin and UV resistance. Recognised as an environmentally friendly material, PLA non-woven fabric has good biodegradability, which can be completely degraded into carbon dioxide and water by microorganisms in nature under specific conditions. It will not pollute our environment.

PLA non-woven fabric not only meets the safety and comfort requirements of disposable protective products, but it also adds new environmental characteristics to the product. It can completely biodegrade within a few months under composting conditions. It is not a burden on the environment, but rather it will be integrated into natural circulation.

PLA non-woven fabric is made to be moisture-proof, breathable, flexible, lightweight, non-combustible, compostable, non-toxic and non-irritating, coloured and recyclable.

Furthermore, PLA non-woven fabric is a pure, safe, healthy, gentle on the skin and high quality material. It has many biological characteristics that other materials cannot match. It is also an ideal base material for high-quality face masks.

The PLA material receives this name because its main component is polylactic acid. This thermoplastic polymer is obtained from the fermentation of vegetables such as corn, cassava or sugar cane, among others.

The permeable bag or sachet contains the organic compost, preferably in a weight between 15 - 50 grams, although in no case can this factor be limiting.

The liquid fertiliser is obtained by placing the bag in water for a few minutes.

Once the liquid fertiliser has been obtained, it can be used to fertilise plants, and the already used bags can be recycled through composting or buried in the ground.

Unless otherwise stated, all technical and scientific elements used in this specification have the meaning commonly understood by a person with ordinary skill in the art to which this invention belongs. In the practice of the present invention, similar or equivalent methods and materials to those described herein can be used.

Throughout the description and the claims, the word "comprises" and its variants do not intend to exclude other technical features, additives, components or steps. For those skilled in the art, other objects, advantages and features of the invention may be partially deduced from both the description and the embodiment of the invention.

### DESCRIPTION OF THE DRAWINGS

To complement the description that is being made and for the purpose of helping to better understand the features of the invention, according to a preferred practical exemplary embodiment thereof, a set of figures is attached as an integral part of said description wherein the following has been depicted with an illustrative and non-limiting character.
**Figure 1****. An image of a permeable bag or sachet with organic compost like the one that is the object of the invention.**
**Figure 2****. A second image where the bag has a fold-out handle.**

### EXAMPLE

In view of the figures, a preferred embodiment of the proposed invention is described below.

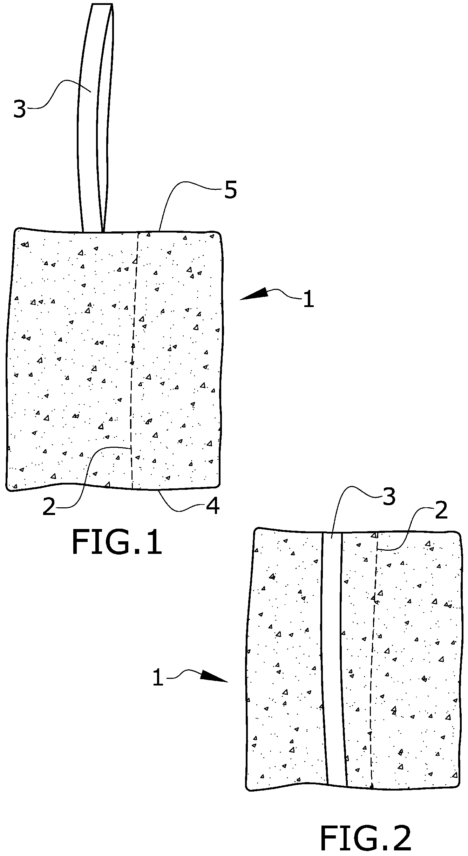

Figure 1 shows a permeable bag or sachet (1) filled with organic compost, wherein, as a result of the manufacturing process, the bag has a longitudinal sealing line (2), as well as a bottom sealing line (4) and another top sealing line (5).

As a result of the manufacturing process, a cutting by-product is generated that is shaped like a handle (3), which can either be attached to the body of the bag or separated for better handling thereof.

In a possible preferred but non-limiting embodiment, the bag is made of a biodegradable material, which in a possible embodiment may be a thermoplastic polymer obtained from the fermentation of vegetables such as corn, cassava or sugar cane, among others, whose main component is polylactic acid.

Polylactic acid (PLA) is a polymer or bioplastic made up of elements similar to lactic acid, with properties similar to those of polyethylene terephthalate (PET) that is used to make packaging, but it can also be biodegradable under certain conditions at temperatures of about 60°C. It can degrade into water and carbon oxide. PLA is produced by ring-opening polymerisation of lactide.

It is a thermoplastic which base materials are obtained from corn starch or cassava, or sugar cane.

Having sufficiently described the nature of the present invention, as well as the manner in which it may be put into practice, it is noted that, within the essential nature thereof, the invention may be put into practice in other embodiments that differ in detail from that which is indicated by way of example, and for which the protection sought will also be achieved, as long as it does not alter, change or modify the fundamental principle of the invention.

## Claims

1. A permeable bag or sachet with organic compost that allows extracting nutrients in a liquid, **characterised in that** the bag (1) contains an organic compost where the solid is retained inside the bag or sachet (1).

2. The permeable bag or sachet with organic compost that allows extracting nutrients in a liquid according to claim 1, **characterised in that** it is made of a thermoplastic polymer obtained from the fermentation of vegetables such as corn, cassava or sugar cane, among others, which main component is polylactic acid.

3. The permeable bag or sachet with organic compost that allows extracting nutrients in a liquid according to claim 2, **characterised in that** the bag has a longitudinal sealing line (2), as well as a bottom sealing line (4) and another top sealing line (5).

4. The permeable bag or sachet with organic compost that allows extracting nutrients in a liquid according to claim 2 or 3, **characterised in that** the bag has a handle (3).
